# EUROPEAN PATENT APPLICATION

(11) **EP 2 600 218 A1**
(43) Date of publication of application: **05.06.2013**
(21) Application number: 12182977.4
(22) Date of filing: 04.09.2012
(51) Int. Cl.: G06F 1/32, G06F 1/16, H04W 52/02, H04M 1/725

(54) **Method for controlling screen state of mobile device and related mobile device**

(30) Priority: 29.11.2011 CN 201110387520
(71) Applicant: Huawei Device Co., Ltd., Longgang District Shenzhen Guangdong 518129 (CN)
(72) Inventor: Yang, Chengjun, Shenzhen Guangdong 518129 (CN)
(74) Representative: Epping - Hermann - Fischer

(57) **Abstract**

The embodiments of the present invention disclose a method for controlling a screen state of a mobile device and a related mobile device. The method according to the embodiments of the present invention includes: judging, when a mobile device is in a standby screen-off state and a screen turn-on instruction is received, whether a cover exists within a preset distance in front of a proximity sensor of the mobile device. If a cover exists within the preset distance in front of the proximity sensor, the mobile device stays in the standby screen-off state, and if no cover exists within the preset distance in front of the proximity sensor, the mobile device switches from the standby screen-off state to a screen-on state. By implementing the solutions in the present invention, battery power of the mobile device can be saved, and time for using the mobile device can be prolonged.

## Description

### FIELD OF THE INVENTION

The present invention relates to the field of mobile terminal technologies, and in particular, to a method for controlling a screen state of a mobile device and a related mobile device.

### BACKGROUND OF THE INVENTION

A mobile device has two screen states, which are a screen-on state and a standby screen-off state respectively. When a user operates a mobile device, the mobile device is in a screen-on state, and a backlight is turned on, and current operation content of the mobile device is displayed; and when the user does not operate the mobile device, the mobile device is in a standby screen-off state, and the backlight is turned off, and no operation content is displayed at all.

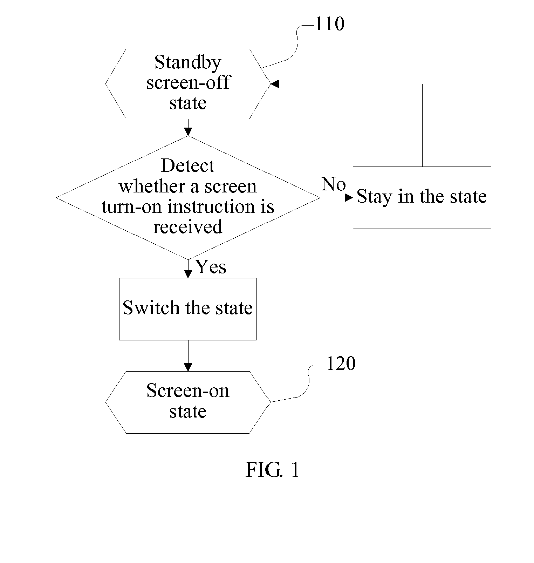

Currently, a mobile device controls a screen state according to a state of operating the mobile device by a user. Referring to FIG. 1 for a procedure of the control method, it is assumed that the user performs no operation on the mobile device initially, to save battery power, the mobile device is in a standby screen-off state 110, a backlight is turned off, and no operation content is displayed at all. When the user needs to operate the mobile device, the mobile device detects whether a screen turn-on instruction is received. The screen turn-on instruction is an electrical signal inside the mobile device, and usually an operation of triggering sending of the screen turn-on instruction is to press a screen turn-on button. If the mobile device receives the screen turn-on instruction, the mobile device switches from the standby screen-off state 110 to a screen-on state 120, and the backlight is turned on, and operation content is displayed for the user to operate, and otherwise, the mobile device stays in the standby screen-off state 110.

A user usually carries a mobile device in a standby screen-off state around in a pocket or backpack. For the mobile device that is in the standby screen-off state and carried in the pocket or backpack, because a screen turn-on button is often pressed by the user by accident, sending a screen turn-on instruction is triggered, so that the mobile device switches from the standby screen-off state to a screen-on state, a backlight is turned on, and operation content is displayed for the user to operate. However, this operation that the mobile device switches from the standby screen-off state to the screen-on state is undesired by the user, which instead wastes battery power of the mobile device for switching to the screen-on state and shortens time for using the mobile device.

### SUMMARY OF THE INVENTION

To solve the foregoing problem, embodiments of the present invention provide a method for controlling a screen state of a mobile device and a related mobile device, which are used for preventing a mobile device from switching from a standby screen-off state to a screen-on state when sending a screen turn-on instruction is triggered by accident, thereby saving battery power of the mobile device and prolonging time for using the mobile device.

A method for controlling a screen state of a mobile device includes:
judging, when a mobile device is in a standby screen-off state and a screen turn-on instruction is received, whether a cover exists within a preset distance in front of a proximity sensor of the mobile device, where
if a cover exists within the preset distance in front of the proximity sensor, the mobile device stays in the standby screen-off state; and if no cover exists within the preset distance in front of the proximity sensor, the mobile device switches from the standby screen-off state to a screen-on state.

A mobile device includes:
a judging module, configured to judge, when a mobile device is in a standby screen-off state and a screen turn-on instruction is received, whether a cover exists within a preset distance in front of a proximity sensor of the mobile device; and
a controlling module, configured to: if a cover exists within the preset distance in front of the proximity sensor, control the mobile device to stay in the standby screen-off state; and if no cover exists within the preset distance in front of the proximity sensor, control the mobile device to switch from the standby screen-off state to a screen-on state.

It can be seen from the foregoing technical solutions that, the embodiments of the present invention have the following advantages.

When a mobile device receives a screen turn-on instruction, it is judged whether a cover exists within a preset distance in front of a proximity sensor. If no, it indicates that a user wants the mobile device to switch from a standby screen-off state to a screen-on state, and the mobile device switches from the standby screen-off state to the screen-on state, thereby preventing the mobile device from switching from the standby screen-off state to the screen-on state when sending a screen turn-on instruction is triggered by accident, saving battery power of the mobile device, and prolonging time for using the mobile device.

### BRIEF DESCRIPTION OF THE DRAWINGS

FIG. 1 is a flow chart of a method for controlling a screen state of a mobile device in the prior art;
FIG. 2 is a flow chart of a method for controlling a screen state of a mobile device according to Embodiment 1 of the present invention;
FIG. 3 is a specific flow chart of a method for controlling a screen state of a mobile device according to Embodiment 2 of the present invention;
FIG. 4 is a specific flow chart of a method for controlling a screen state of a mobile device according to Embodiment 3 of the present invention;
FIG. 5 is a specific flow chart of a method for controlling a screen state of a mobile device according to Embodiment 4 of the present invention; and
FIG. 6 is a structural diagram of a mobile device according to Embodiment 5 of the present invention.

### DETAILED DESCRIPTION OF THE EMBODIMENTS

The embodiments of the present invention provide a method for controlling a screen state of a mobile device, which is used for preventing a mobile device from switching from a standby screen-off state to a screen-on state when sending a screen turn-on instruction is triggered by accident. The embodiments of the present invention further provide a mobile device related to the method. The method and the device are described in detail in the following respectively.

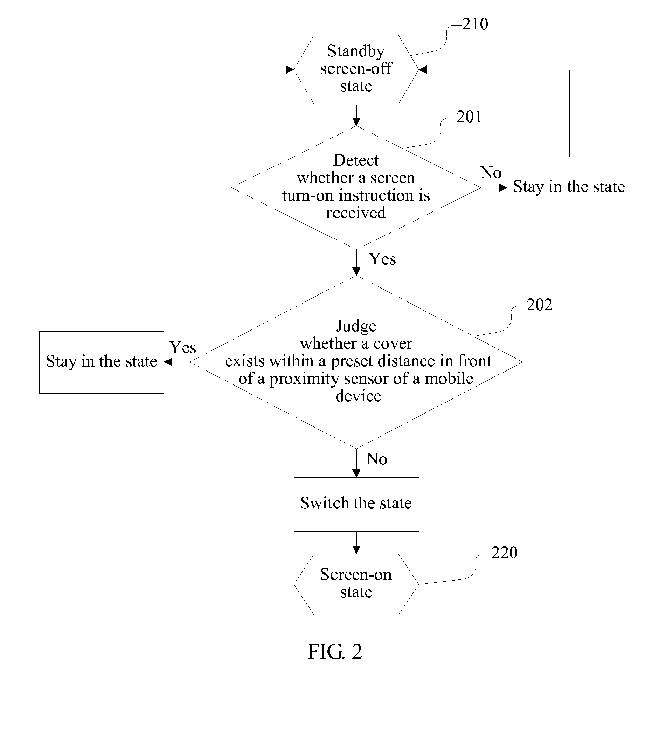

In Embodiment 1 of the present invention, a method for controlling a screen state of a mobile device is described. Referring to FIG. 2, its implementation procedure mainly includes the following steps.

201: If a screen turn-on instruction is received, judge whether a cover exists within a preset distance in front of a proximity sensor of a mobile device.

When the mobile device is in a standby screen-off state 210, the mobile device detects whether a screen turn-on instruction is received. The screen turn-on instruction is an electrical signal inside the mobile device, and usually an operation of triggering sending of the screen turn-on instruction is to press a screen turn-on button.

If a detection result is that no screen turn-on instruction is received, the mobile device stays in the standby screen-off state 210, and if the detection result is that a screen turn-on instruction is received, it is judged whether a cover exists within the preset distance in front of the proximity sensor of the mobile device.

Generally, when a user does not operate a mobile device, the mobile device is usually carried around in a pocket or backpack. Therefore, a cover such as fabric of clothes or another object inside the backpack usually exists within a short distance in front of a screen of the mobile device. When the user operates the mobile device, the human body needs to keep a certain distance from the screen of the mobile device. Therefore, by judging whether a cover exists within a preset distance in front of a proximity sensor of the mobile device, it can be known whether a reason that a screen turn-on instruction is sent this time is that the user triggers a screen turn-on button by accident.

202: If a judging result is yes, the mobile device stays in the standby screen-off state; and if the judging result is no, the mobile device switches from the standby screen-off state to a screen-on state.

In step 201, if the mobile device detects that a screen turn-on instruction is received, it is judged whether a cover exists within a preset distance in front of a proximity sensor of the mobile device. If a judging result is that a cover exists within the preset distance in front of the proximity sensor, the mobile device stays in the standby screen-off state 210, and if the judging result is that no cover exists within the preset distance in front of the proximity sensor, the mobile device switches from the standby screen-off state 210 to a screen-on state 220.

In this embodiment, when the mobile device is in the standby screen-off state 210, if it is detected that a screen turn-on instruction is received, it is judged whether a cover exists within a preset distance in front of a proximity sensor. If no, it indicates that the user wants the mobile device to switch from the standby screen-off state 210 to the screen-on state 220, and the mobile device switches from the standby screen-off state 210 to the screen-on state 220. If yes, it indicates that the user does not want the mobile device to switch from the standby screen-off state 210 to the screen-on state 220, and the mobile device stays in the standby screen-off state 210, thereby preventing the mobile device from switching from the standby screen-off state 210 to the screen-on state 220 when sending a screen turn-on instruction is triggered by accident, saving battery power of the mobile device, and prolonging time for using the mobile device.

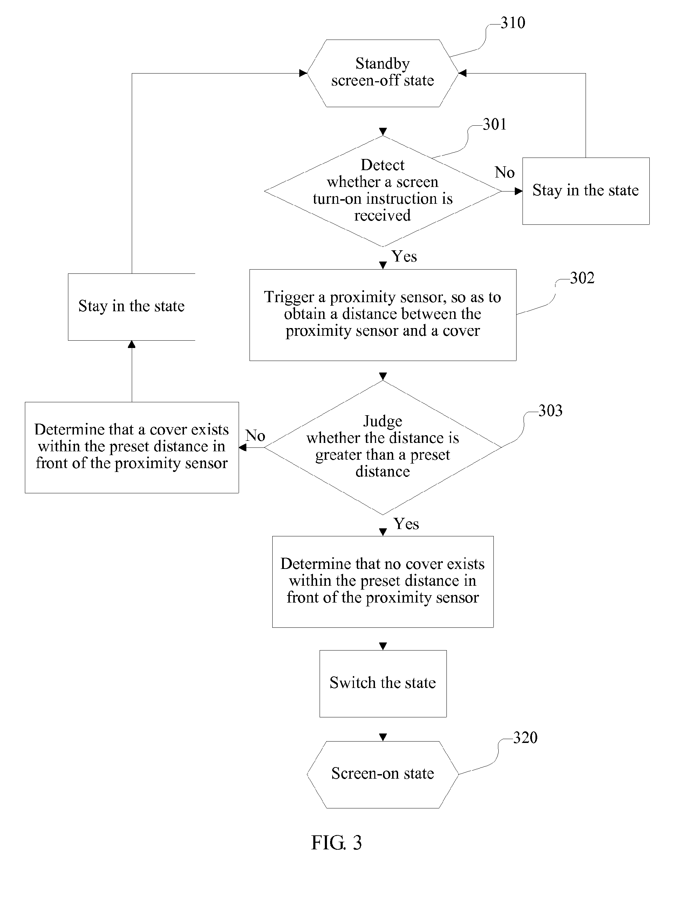

In Embodiment 2 of the present invention, the method for controlling a screen state of a mobile device in Embodiment 1 is described in detail. Referring to FIG. 3, its implementation procedure specifically includes the following steps.

301: If a screen turn-on instruction is received, trigger a proximity sensor, so as to obtain the distance between the proximity sensor and a cover.

When a mobile device is in a standby screen-off state 310, the mobile device detects whether a screen turn-on instruction is received. The screen turn-on instruction is an operation instruction that is sent when a screen turn-on button is pressed, and the screen turn-on button is a power button or another button which can be pressed to trigger sending of a screen turn-on instruction, which is not limited here specifically.

The standby screen-off state 310 is a state in which the mobile device does not display operation content and a backlight is turned off.

If a detection result is that no screen turn-on instruction is received, the mobile device stays in the standby screen-off state 310, and if the detection result is that a screen turn-on instruction is received, the proximity sensor is triggered, so as to obtain the distance between the proximity sensor and the cover.

A principle for the proximity sensor to obtain the distance between the proximity sensor and the cover is that a transmitter of the proximity sensor converts an electrical signal into a detection signal, and transmits the detection signal. The detection signal is reflected when meeting a cover, and a receiver of the proximity sensor receives a reflected detection signal, and converts the detection signal into an electrical signal. The distance between the proximity sensor and the cover is judged by calculating a time difference between the transmission and the reception in combination with a travel speed of the detection signal. In addition, the proximity sensor is generally an infrared proximity sensor, and may also be a linear proximity sensor or an ultrasonic proximity sensor, which is not limited here specifically.

Generally, when a user does not operate a mobile device, the mobile device is usually carried around in a pocket or backpack. Therefore, a cover such as fabric of clothes or another object in the backpack usually exists within a short distance in front of a screen of the mobile device, and in this case, a distance between a proximity sensor and the cover is relatively short. When the user operates the mobile device, the human body needs to keep a certain distance from the screen of the mobile device, namely, the distance between the proximity sensor and the cover is relatively far. Therefore, by judging whether a cover exists within a preset distance in front of a proximity sensor of the mobile device, it can be known whether a reason that a screen turn-on instruction is sent this time is that the user triggers a screen turn-on button by accident.

302: Judge whether the distance is greater than a preset distance. If a judging result is no, it is determined that a cover exists within the preset distance in front of the proximity sensor, and if the judging result is yes, it is determined that no cover exists within the preset distance in front of the proximity sensor.

It is judged whether the distance is greater than a preset distance. If a judging result is that the distance is not greater than the preset distance, it is determined that a cover exists within the preset distance in front of the proximity sensor, and if the judging result is that the distance is greater than the preset distance, it is determined that no cover exists within the preset distance in front of the proximity sensor.

The preset distance may be adjusted according to an actual requirement, which is not limited here specifically.

303: If a cover exists within the preset distance in front of the proximity sensor, the mobile device stays in the standby screen-off state; and if no cover exists within the preset distance in front of the proximity sensor, the mobile device switches from the standby screen-off state to a screen-on state.

In step 302, if it is determined that a cover exists within the preset distance in front of the proximity sensor of the mobile device, the mobile device stays in the standby screen-off state 310, and if it is determined that no cover exists within the preset distance in front of the proximity sensor of the mobile device, the mobile device switches from the standby screen-off state 310 to a screen-on state 320.

The screen-on state is a state in which the mobile device displays operation content and a backlight is turned on.

In this embodiment, when the mobile device is in the standby screen-off state 310, if it is detected that a screen turn-on instruction is received, a proximity sensor is triggered, so as to obtain a distance between the proximity sensor and a cover. If the distance is greater than a preset distance, it may be determined that no cover exists within the preset distance in front of the proximity sensor, which indicates that the user wants the mobile device to switch from the standby screen-off state 310 to the screen-on state 320, and the mobile device switches from the standby screen-off state 310 to the screen-on state 320. If the distance is greater than the preset distance not greater than the preset distance, it may be determined that a cover exists within the preset distance in front of the proximity sensor, which indicates that the user does not want the mobile device to switch from the standby screen-off state 310 to the screen-on state 320, and the mobile device stays in the standby screen-off state 310, thereby preventing the mobile device from switching from the standby screen-off state 310 to the screen-on state 320 when sending a screen turn-on instruction is triggered by accident, saving battery power of the mobile device, and prolonging time for using the mobile device.

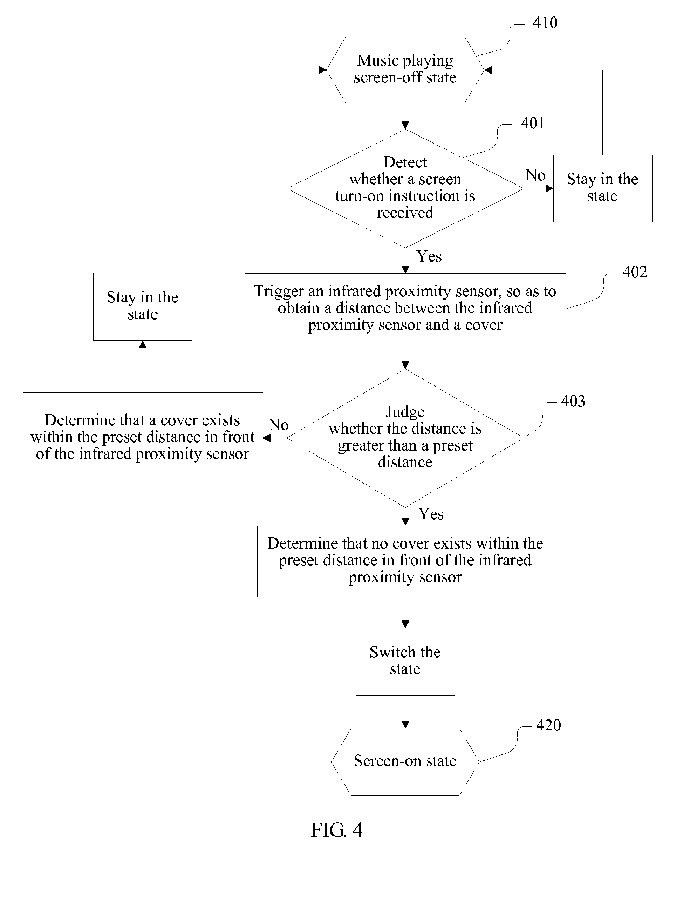

In Embodiment 3 of the present invention, the method for controlling a screen state of a mobile device in Embodiment 2 is described in detail. Referring to FIG. 4, its implementation procedure specifically includes the following steps.

401: If a screen turn-on instruction is received, an infrared proximity sensor is triggered, so as to obtain a distance between the infrared proximity sensor and a cover.

When a mobile device is in a music playing screen-off state 410, the mobile device detects whether a screen turn-on instruction is received. The screen turn-on instruction is an operation instruction that is sent when a screen turn-on button is pressed, and the screen turn-on button is a power button or another button which can be pressed to trigger sending of a screen turn-on instruction, which is not limited here specifically.

The music playing screen-off state 410 is a state in which the mobile device does not display music playing operation content and a backlight is turned off.

If a detection result is that no screen turn-on instruction is received, the mobile device stays in the music playing screen-off state 410, and if the detection result is that a screen turn-on instruction is received, the infrared proximity sensor is triggered, so as to obtain the distance between the infrared proximity sensor and the cover.

A principle for the infrared proximity sensor to obtain the distance between the infrared proximity sensor and the cover is that a transmitter of the infrared proximity sensor converts an electrical signal into an optical signal, and transmits the optical signal. The optical signal is reflected when meeting a cover, and a receiver of the infrared proximity sensor receives a reflected optical signal, and converts the optical signal into an electrical signal. The distance between the infrared proximity sensor and the cover is judged by calculating a time difference between the transmission and the reception in combination with a travel speed of the optical signal. In addition, the proximity sensor in the present invention may also be a linear proximity sensor or an ultrasonic proximity sensor in addition to an infrared proximity sensor, which is not limited here specifically.

Generally, when a user plays music and does not perform a music playing content operation by using a mobile device, the mobile device is usually carried around in a pocket or backpack. Therefore, a cover such as fabric of clothes or another object in the backpack usually exists within a short distance in front of a screen of the mobile device, and in this case, a distance between an infrared proximity sensor and a cover is relatively short. When the user performs a music playing content operation by using the mobile device, the human body needs to keep a certain distance from the screen of the mobile device, namely, the distance between the infrared proximity sensor and the cover is relatively far. Therefore, by judging whether a cover exists within a preset distance in front of an infrared proximity sensor of the mobile device, it can be known whether a reason that a screen turn-on instruction is sent this time is that the user triggers a screen turn-on button by accident.

402: Judge whether the distance is greater than a preset distance. If a judging result is no, it is determined that a cover exists within the preset distance in front of the infrared proximity sensor, and if the judging result is yes, it is determined that no cover exists within the preset distance in front of the infrared proximity sensor.

It is judged whether the distance is greater than a preset distance. If a judging result is that the distance is not greater than the preset distance, it is determined that a cover exists within the preset distance in front of the infrared proximity sensor, and if the judging result is that the distance is greater than the preset distance, it is determined that no cover exists within the preset distance in front of the infrared proximity sensor.

The preset distance may be adjusted according to an actual requirement, which is not limited here specifically.

403: If a cover exists within the preset distance in front of the infrared proximity sensor, the mobile device stays in the music playing screen-off state; and if no cover exists within the preset distance in front of the infrared proximity sensor, the mobile device switches from the music playing screen-off state to a screen-on state.

In step 402, if it is determined that a cover exists within the preset distance in front of the infrared proximity sensor of the mobile device, the mobile device stays in the music playing screen-off state 410, and if it is determined that no cover exists within the preset distance in front of the infrared proximity sensor of the mobile device, the mobile device switches from the music playing screen-off state 410 to a screen-on state 420.

The screen-on state 420 is a state in which the mobile device displays music playing operation content and a backlight is turned on.

In this embodiment, when the mobile device is in the music playing screen-off state 410, if it is detected that a screen turn-on instruction is received, an infrared proximity sensor is triggered, so as to obtain a distance between the infrared proximity sensor and a cover. If the distance is greater than a preset distance, it may be determined that no cover exists within the preset distance in front of the infrared proximity sensor, which indicates that the user wants the mobile device to switch from the music playing screen-off state 410 to the screen-on state 420, and the mobile device switches from the music playing screen-off state 410 to the screen-on state 420. If the distance is greater than the preset distance not greater than the preset distance, it may be determined that a cover exists within the preset distance in front of the infrared proximity sensor, which indicates that the user does not want the mobile device to switch from the music playing screen-off state 410 to the screen-on state 420, and the mobile device stays in the music playing screen-off state 410, thereby preventing the mobile device from switching from the music playing screen-off state 410 to the screen-on state 420 when sending a screen turn-on instruction is triggered by accident, saving battery power of the mobile device, and prolonging time for using the mobile device.

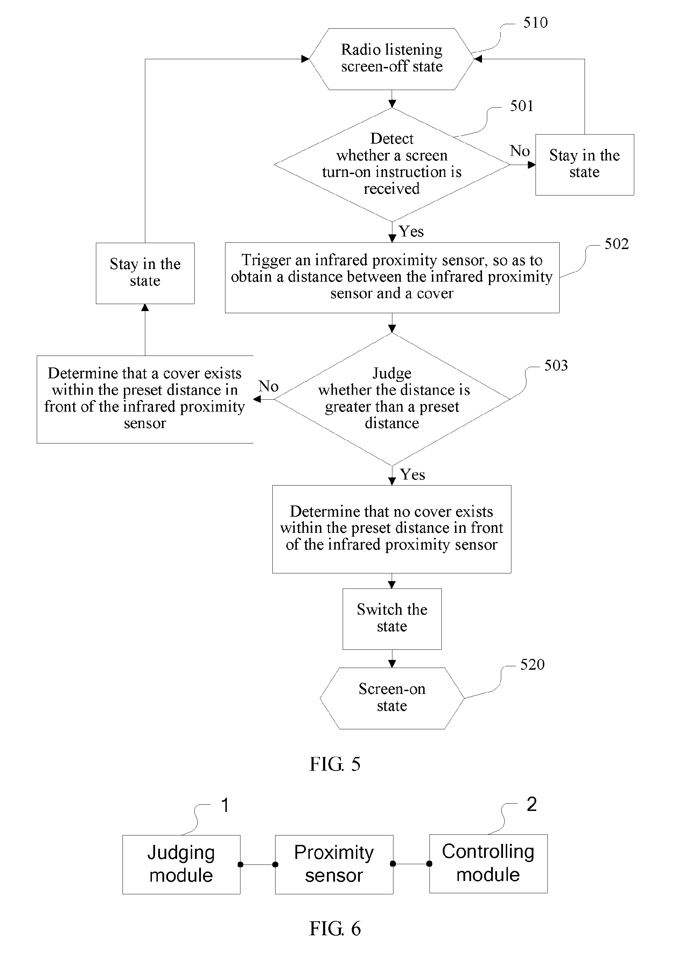

In Embodiment 4 of the present invention, the method for controlling a screen state of a mobile device in Embodiment 2 is described in detail. Referring to FIG. 5, its implementation procedure specifically includes the following steps.

501: If a screen turn-on instruction is received, an infrared proximity sensor is triggered, so as to obtain a distance between the infrared proximity sensor and a cover.

When a mobile device is in a radio listening screen-off state 510, the mobile device detects whether a screen turn-on instruction is received. The screen turn-on instruction is an operation instruction that is sent when a screen turn-on button is pressed, and the screen turn-on button is a power button or another button which can be pressed to trigger sending of a screen turn-on instruction, which is not limited here specifically.

The radio listening screen-off state 510 is a state in which the mobile device does not display radio listening operation content and a backlight is turned off.

If a detection result is that no screen turn-on instruction is received, the mobile device stays in the radio listening screen-off state 510, and if the detection result is that a screen turn-on instruction is received, the infrared proximity sensor is triggered, so as to obtain the distance between the infrared proximity sensor and the cover.

A principle for the infrared proximity sensor to obtain the distance between the infrared proximity sensor and the cover is that a transmitter of the infrared proximity sensor converts an electrical signal into an optical signal, and transmits the optical signal. The optical signal is reflected when meeting a cover, and a receiver of the infrared proximity sensor receives a reflected optical signal, and converts the optical signal into an electrical signal. The distance between the infrared proximity sensor and the cover is judged by calculating a time difference between the transmission and the reception in combination with a travel speed of the optical signal. In addition, the proximity sensor in the present invention may also be a linear proximity sensor or an ultrasonic proximity sensor in addition to an infrared proximity sensor, which is not limited here specifically.

Generally, when a user listens to the radio and does not perform a music playing content operation by using a mobile device, the mobile device is usually carried around in a pocket or backpack. Therefore, a cover such as fabric of clothes or another object in the backpack usually exists within a short distance in front of a screen of the mobile device, and in this case, a distance between an infrared proximity sensor and a cover is relatively short. When the user performs a radio listening content operation by using the mobile device, the human body needs to keep a certain distance from the screen of the mobile device, namely, the distance between the infrared proximity sensor and the cover is relatively far. Therefore, by judging whether a cover exists within a preset distance in front of an infrared proximity sensor of the mobile device, it can be known whether a reason that a screen turn-on instruction is sent this time is that the user triggers a screen turn-on button by accident.

502: Judge whether the distance is greater than a preset distance. If a judging result is no, it is determined that a cover exists within the preset distance in front of the infrared proximity sensor, and if the judging result is yes, it is determined that no cover exists within the preset distance in front of the infrared proximity sensor.

It is judged whether the distance is greater than a preset distance. If a judging result is that the distance is not greater than the preset distance, it is determined that a cover exists within the preset distance in front of the infrared proximity sensor, and if the judging result is that the distance is greater than the preset distance, it is determined that no cover exists within the preset distance in front of the infrared proximity sensor.

The preset distance may be adjusted according to an actual requirement, which is not limited here specifically.

503: If a cover exists within the preset distance in front of the infrared proximity sensor, the mobile device stays in the radio listening screen-off state; and if no cover exists within the preset distance in front of the infrared proximity sensor, the mobile device switches from the radio listening screen-off state to a screen-on state.

In step 502, if it is determined that a cover exists within the preset distance in front of the infrared proximity sensor of the mobile device, the mobile device stays in the radio listening screen-off state 510, and if it is determined that no cover exists within the preset distance in front of the infrared proximity sensor of the mobile device, the mobile device switches from the radio listening screen-off state 510 to a screen-on state 520.

The screen-on state 520 is a state in which the mobile device displays music playing operation content and a backlight is turned on.

In this embodiment, when the mobile device is in the radio listening screen-off state 510, if it is detected that a screen turn-on instruction is received, an infrared proximity sensor is triggered, so as to obtain a distance between the infrared proximity sensor and a cover. If the distance is greater than a preset distance, it may be determined that no cover exists within the preset distance in front of the infrared proximity sensor, which indicates that the user wants the mobile device to switch from the radio listening screen-off state 510 to the screen-on state 520, and the mobile device switches from the radio listening screen-off state 510 to the screen-on state 520. If the distance is greater than the preset distance not larger than the preset distance, it may be determined that a cover exists within the preset distance in front of the infrared proximity sensor, which indicates that the user does not want the mobile device to switch from the radio listening screen-off state 510 to the screen-on state 520, and the mobile device stays in the radio listening screen-off state 510, thereby preventing the mobile device from switching from the radio listening screen-off state 510 to the screen-on state 520 when sending a screen turn-on instruction is triggered by accident, saving battery power of the mobile device, and prolonging time for using the mobile device.

In Embodiment 5 of the present invention, a mobile device related to a method for controlling a screen state of a mobile device is described. FIG. 6 is a structural diagram of the mobile device, and the mobile device mainly includes:
A judging module 601 is configured to judge, when the mobile device is in a standby screen-off state and a screen turn-on instruction is received, whether a cover exists within a preset distance in front of a proximity sensor of the mobile device.

When the mobile device is in a standby screen-off state, the mobile device detects whether a screen turn-on instruction is received. The screen turn-on instruction is an electrical signal inside the mobile device, and usually an operation of triggering sending of a screen turn-on instruction is to press a screen turn-on button.

If a detection result is that no screen turn-on instruction is received, the mobile device stays in the standby screen-off state, and if the detection result is that a screen turn-on instruction is received, it is judged whether a cover exists within the preset distance in front of the proximity sensor of the mobile device.

The proximity sensor is configured to obtain a distance between the proximity sensor and a cover. A principle for the proximity sensor to obtain the distance between the proximity sense and the cover is that a transmitter of the proximity sensor converts an electrical signal into a detection signal, and transmits the detection signal. The detection signal is reflected when meeting a cover, and a receiver of the proximity sensor receives a reflected detection signal, and converts the detection signal into an electrical signal. The distance between the proximity sensor and the cover is judged by calculating a time difference between the transmission and the reception in combination with a travel speed of the detection signal. In addition, the proximity sensor is generally an infrared proximity sensor, and may also be a linear proximity sensor or an ultrasonic proximity sensor, which is not limited here specifically.

Generally, when a user does not operate a mobile device, the mobile device is usually carried around in a pocket or backpack. Therefore, a cover such as fabric of clothes or another object in the backpack usually exists within a short distance in front of a screen of the mobile device. When the user operates the mobile device, the human body needs to keep a certain distance from the screen of the mobile device. Therefore, by judging whether a cover exists within a preset distance in front of a proximity sensor of the mobile device, it can be known whether a reason that a screen turn-on instruction is sent this time is that the user triggers a screen turn-on button by accident.

A controlling module 602 is configured to: if a judging result of the judging module 601 is that a cover exists within the preset distance in front of the proximity sensor, control the mobile device to stay in the standby screen-off state; and if the judging result of the judging module 601 is that no cover exists within the preset distance in front of the proximity sensor, control the mobile device to switch from the standby screen-off state to a screen-on state.

If the mobile device detects that a screen turn-on instruction is received, the judging module 601 judges whether a cover exists within a preset distance in front of a proximity sensor of the mobile device. If a judging result is that a cover exists within the preset distance in front of the proximity sensor, the mobile device stays in the standby screen-off state, and if the judging result is that no cover exists within the preset distance in front of the proximity sensor, the mobile device switches from the standby screen-off state to a screen-on state.

In this embodiment, when the mobile device is in the standby screen-off state, if it is detected that a screen turn-on instruction is received, the judging module 601 judges whether a cover exists within a preset distance in front of a proximity sensor. If no, it indicates that the user wants the mobile device to switch from the standby screen-off state to the screen-on state, and the mobile device switches from the standby screen-off state to the screen-on state. If yes, it indicates that the user does not want the mobile device to switch from the standby screen-off state to the screen-on state, and the mobile device stays in the standby screen-off state, thereby preventing the mobile device from switching from the standby screen-off state to the screen-on state when sending a screen turn-on instruction is triggered by accident, saving battery power of the mobile device, and prolonging time for using the mobile device.

Persons of ordinary skill in the art may understand that all or part of the steps of the method according to the embodiments may be implemented by a program instructing relevant hardware. The program may be stored in a computer readable storage medium, and the storage medium may be a read-only memory, a magnetic disk, or an optical disk, and so on.

The method for controlling a screen state of a mobile device and the related mobile device provided in the present invention are described in detail in the foregoing. Persons of ordinary skill in the art may make changes to both the specific implementation manner and the application scope according to the ideas of the embodiments of the present invention. In conclusion, the content of the specification should not be construed as a limitation on the present invention.

## Claims

1. A method for controlling a screen state of a mobile device, comprising:
judging, when a mobile device is in a standby screen-off state and a screen turn-on instruction is received, whether a cover exists within a preset distance in front of a proximity sensor of the mobile device, wherein
if a cover exists within the preset distance in front of the proximity sensor, the mobile device stays in the standby screen-off state; and if no cover exists within the preset distance in front of the proximity sensor, the mobile device switches from the standby screen-off state to a screen-on state.

2. The method according to claim 1, wherein the judging whether a cover exists within a preset distance in front of a proximity sensor of the mobile device comprises:
triggering the proximity sensor, so as to obtain a distance between the proximity sensor
and a cover; and
judging whether the distance is greater than the preset distance, wherein if a judging result is no, it is determined that a cover exists within the preset distance in front of the proximity sensor, and if the judging result is yes, it is determined that no cover exists within the preset distance in front of the proximity sensor.

3. The method according to claim 1 or 2, wherein,
the proximity sensor is an infrared proximity sensor, or a linear proximity sensor, or an ultrasonic proximity sensor.

4. The method according to any one of claims 1 to 3, wherein,
the standby screen-off state is a state in which the mobile device does not display operation content and a backlight is turned off.

5. The method according to any one of claims 1 to 4, wherein,
the screen-on state is a state in which the mobile device displays operation content and a backlight is turned on.

6. The method according to any one of claims 1 to 5, wherein,
the standby screen-off state comprises a music playing screen-off state and a radio listening screen-off state.

7. The method according to any one of claims 1 to 6, wherein,
the screen turn-on instruction is an operation instruction that is sent when a screen turn-on button is pressed.

8. A mobile device, comprising:
a judging module, configured to judge, when the mobile device is in a standby screen-off state and a screen turn-on instruction is received, whether a cover exists within a preset distance in front of a proximity sensor of the mobile device; and
a controlling module, configured to: if a cover exists within the preset distance in front of the proximity sensor, control the mobile device to stay in the standby screen-off state; and if no cover exists within the preset distance in front of the proximity sensor, control the mobile device to switch from the standby screen-off state to a screen-on state.

9. The mobile device according to claim 8, wherein,
the proximity sensor is configured to obtain a distance between the proximity sensor and the cover.

10. The mobile device according to claim 8 or 9, wherein,
the proximity sensor is an infrared proximity sensor, or a linear proximity sensor, or an ultrasonic proximity sensor.
